# EUROPEAN PATENT SPECIFICATION

(11) **EP 2 487 659 B1**
(45) Date of publication and mention of the grant of the patent: **09.01.2013**
(21) Application number: 12154654.3
(22) Date of filing: 09.02.2012
(51) Int. Cl.: G08B 25/01

(54) **A system for characterizing the driving style of vehicle drivers**
System zur Charakterisierung des Fahrstils eines Fahrzeugführers
Système de caractérisation du style de conduite de conducteurs de véhicule

(30) Priority: 09.02.2011 IT AN20110017
(43) Date of publication of application: 15.08.2012
(73) Proprietor: Infomobility.it S.p.A., 64100 Teramo (IT)
(72) Inventor: Iachini, Franco, 64100 Teramo (TE) (IT)
(74) Representative: Cutropia, Gianluigi

(56) References cited:
- DE-A1- 4 420 469
- DE-A1- 10 056 756
- US-A1- 2005 131 597

## Description

The present patent application for industrial invention relates to an assessment system of a risk indicator associated with the driving style of a vehicle driver.

Satellite navigators for vehicles are largely known on the market, which operate with GPS protocol to indicate the exact position of a vehicle on the territory.

Satellite localization devices are largely known on the market, which are also used as antitheft device to signal the position of a stolen vehicle.

Accident detectors (crash sensors) for vehicles are also known, generally in the form of accelerometers that detect a sudden acceleration variation of the vehicle indicative of a crash. Said crash sensors are generally connected to the vehicle airbags.

Mobile telephones integrated in the vehicle are also known, which operate with GSM or GPRS protocol to make telephone calls from the vehicle.

US2005/037730, W02009/133450, GB2390208, US2002/037707 disclose devices mounted onboard a vehicle to signal an accident to a competent office, such as breakdown service, police and the like.

However, none of the aforementioned prior documents discloses the use of said devices to assess a risk indicator of the vehicle driver.

Generally, insurance policies are drawn up by insurance companies based on the accident risk of the vehicle driver. Therefore, it would be desirable for insurance companies to have a system able to assess the accident risk of the vehicle driver objectively.

The purpose of the present invention is to provide an assessment system of the risk indicator of the vehicle driver that is reliable and simple to make and use.

These purposes are achieved according to the invention, with characteristics claimed in independent claim 1.

Advantageous embodiments appear from the dependent claims.

According to the invention the assessment system of a risk indicator of the vehicle driver uses an accelerometer to detect the acceleration and deceleration values of a vehicle, a GPS to detect the position and speed of a vehicle and a GSM/GPRS module to send the detected data to an operations center that calculates the assessment of the risk indicator of the vehicle driver.

Further characteristics of the invention will appear more evident from the following description, which refers to a merely illustrative, not limiting embodiment, illustrated in the attached drawings, wherein:
Fig. 1 is an exploded perspective view of a box used to contain the device for implementation of the process according to the invention;
Fig. 2 is a block diagram showing the functional blocks and the operation of the device for implementation of the process according to the invention;
Fig. 3 is a block diagram showing the process of the invention; and
Fig. 4 is a block diagram showing the process implemented by the operations center.

Referring to the aforementioned figures, the device for implementation of the process according to the invention is disclosed, being generally indicated with numeral (1).

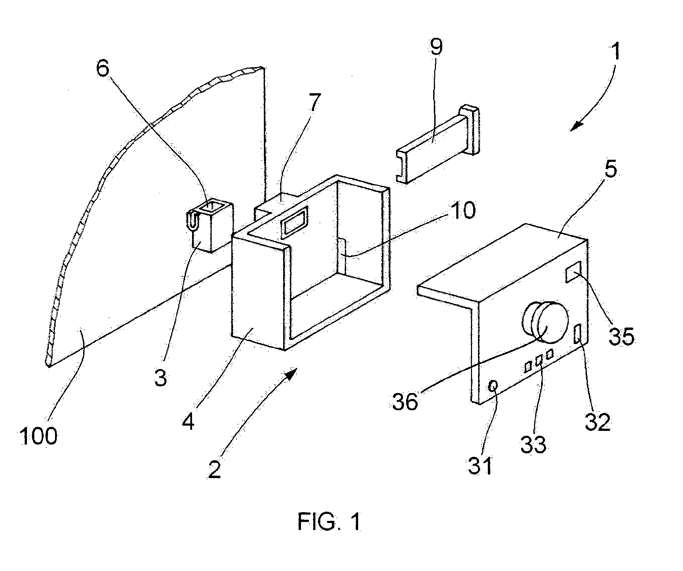

Referring to Fig. 1, the device (1) comprises a container box (2) and a support connector (3).

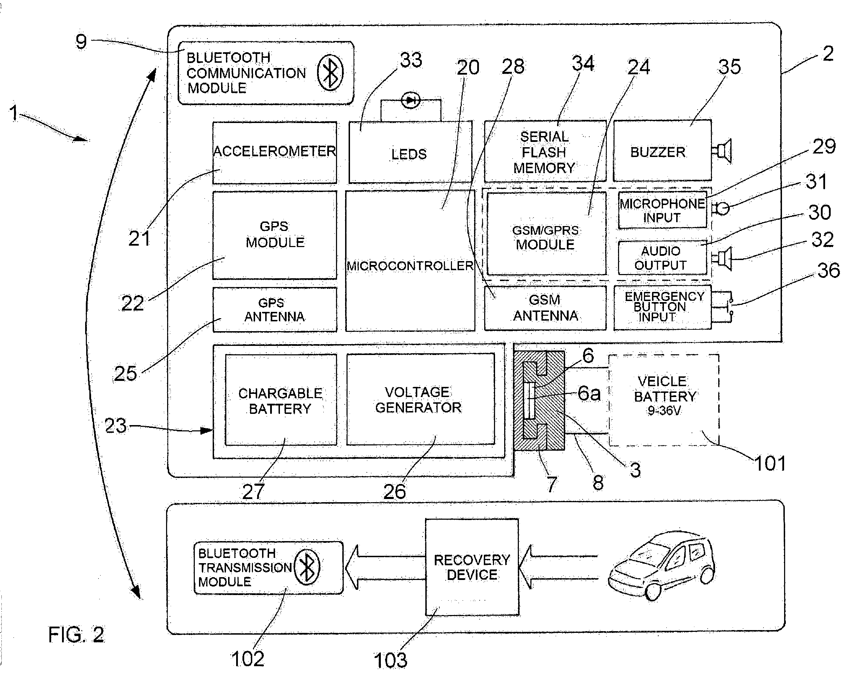

The container box (2) comprises a base (4) and a lid (5) and is adapted to contain all functional blocks shown in Fig. 2, as illustrated below.

Going back to Fig. 1, the support connector (3) is fixed to a windshield (100) of the vehicle with permanent tape. As shown in Fig. 2, electrical contacts (6) are provided in the support connector (3) to go in contact with electrical contacts (6a) of a complementary connector (7) provided on the base of the container box.

Referring to Fig. 2, the support connector (3) is connected to a battery (101) of the vehicle by means of electrical cables.

Going back to Fig. 1, the device (1) can be optionally provided with a Bluetooth communication module (9) that can be inserted into a dedicated slot (10) of the base of the box (2).

Referring to Fig. 2, the Bluetooth communication module (9) communicates with a Bluetooth transmission module (102) connected to a retrieval device (103) adapted to retrieve information on vehicle from the vehicle control unit.

The box (2) contains a microcontroller (20), an accelerometer (21), a GPS satellite module (22), a power supply unit (23) and a GSM/GPRS mobile telephone module (24).

The microcontroller (20) controls the operation of all the devices of the device (1).

The accelerometer (21) is preferably of 3-axis type, adapted to detect sudden accelerations or deceleration of the vehicle indicative of improper driving or accident.

The GPS satellite module (22) is provide with integrated GPS antenna (25) in order to detect the exact position of the vehicle.

The power supply unit (23) comprises a voltage generator (26) that takes 9-36V power from the battery (101) of the vehicle and converts it to suitably power all the devices contained in the box of the device. The power supply unit (23) also comprises a backup rechargeable battery (27) contained in the box (2).

The GSM/GPRS mobile telephone module (24) comprises a GSM integrated antenna (28) for connection with a mobile telephone network. The GSM/GPRS mobile telephone module (24) also comprises one audio input (29) and one audio output (30) of hands-free type. Referring to Fig. 1, the audio input (29) and the audio output (30) are respectively connected to a microphone (31) and a loudspeaker (32) installed on the walls of the lid (5) of the box. The GSM/GPRS mobile telephone module (24) is adapted to connect with an assistance center in such manner to send messages and/or put the vehicle driver in communication with the assistance center.

The installation of the device (1) on the windshield (100) of the vehicle allows for positioning the microphone (31) and loudspeaker (32) in the best position for the driver's use.

The device (1) comprises a data storage memory (34). The memory (34) can be of NAND flash serial type.

Optionally, the device (1) can comprise a LED unit (33), an audio buzzer (35) and an emergency button (36).

The LED unit (33), the audio buzzer (35) and the emergency button (36) are installed on a wall of the lid (5) of the box in order to be accessible for the user. The emergency button (36) is connected to the mobile telephone module (24) to put the driver in communication with the assistance center.

Going back to Fig. 1, it must be considered that the support connector (3), the base (4) and the lid (5) of the box are mutually closed with key or anti-tampering screw. Moreover, the microcontroller (20) constantly monitors the electrical contacts (6, 6a) of the connector (3) and of the box (2) in order to detect a possible attempt of disconnection of the box from the connector or tampering.

The operation of the device (1) is disclosed hereinafter.

The GPS module (22) constantly detects the exact position of the vehicle. When the vehicle has an accident, the accelerometer (21) detects the accident and sends the signal to the microcontroller (20). The microcontroller (20) activates the GSM/GPRS module (24) that sends an accident signal to the assistance center, together with the exact position of the vehicle detected by the GPS module (22). So, the assistance center can provide rapid assistance to the vehicle. Moreover, by means of the GSM/GPRS module (24), the driver is put into communication with the assistance center.

The device (1) of the invention permits the following functions:
- Localize the vehicle, in case of theft, by means of the GPS module (22).
- Collect data to record the use of the vehicle (traveled kilometers by road type and use time) and collect data to evaluate the "driving behavior" of the driver by means of the Bluetooth communication module (9).
- Send the aforementioned information to a remote station by means of the GSM/GPRS module (24).
- Detect a removal and/or tampering attempt by means of the microcontroller (20) connected to the electrical contacts.
- Generate an alarm in case of removal and/or tampering by means of the buzzer (35) and send the alarm signal to a remote station by means of the GSM/GPRS module (24).
- Activate an emergency call by means of the emergency button (36) and the GSM/GPRS module (24).
- Detect a crash (crash definition: impact with acceleration higher than 2.5g) by means of the accelerometer (21)
- Generate an alarm in case of crash by means of the buzzer (35); send crash information to a remote station by means of the GSM/GPRS module (24) and, in case of crash, establish a hands-free call from external support operators by means of the emergency button (36) and the GSM/GPRS module (24).

The software installed in the device (1) offers a series of safety and fleet management functionalities that can be used by means of an operations center.
- Vehicle localization and tracking on demand. The peripheral unit can be interrogated over the GSM/GPRS channels to update the GPS position and the status of the on board apparatus.
- Crash detection. The on board system detects the crash event by means of the accelerometer (21).
- Automatic emergency call. The system makes an automatic call to the operations center. Information includes date, georeferencing, and vehicle type.
- Manual emergency call. The system is provided with an emergency button (36) for the user to make an emergency call.
- Rescue sending. After making the necessary checks, according to the type of accident, the operations center sends the rescue means (ambulance, fire brigade, breakdown truck).
- Other alarm events. The peripheral unit controls other types of alarm, such as:
- Theft (movement and/or lifting of vehicle)
- Tampering.
- Battery removal. Also in this case an emergency call is made to the operations center, including information on the vehicle position.
- Reports and travel history. The individual travels made by the vehicle are recorded (switch-on and switch-off). The position is sampled every 2 seconds and the history of the positions is sent with frequency configurable at least every 7 minutes. Each sample includes latitude, longitude, speed and date. By means of proprietary coding system, the traffic generated for transmission of said data does not exceed 300 Kb a month, assuming an average use of the vehicle of about 2 hours a day.

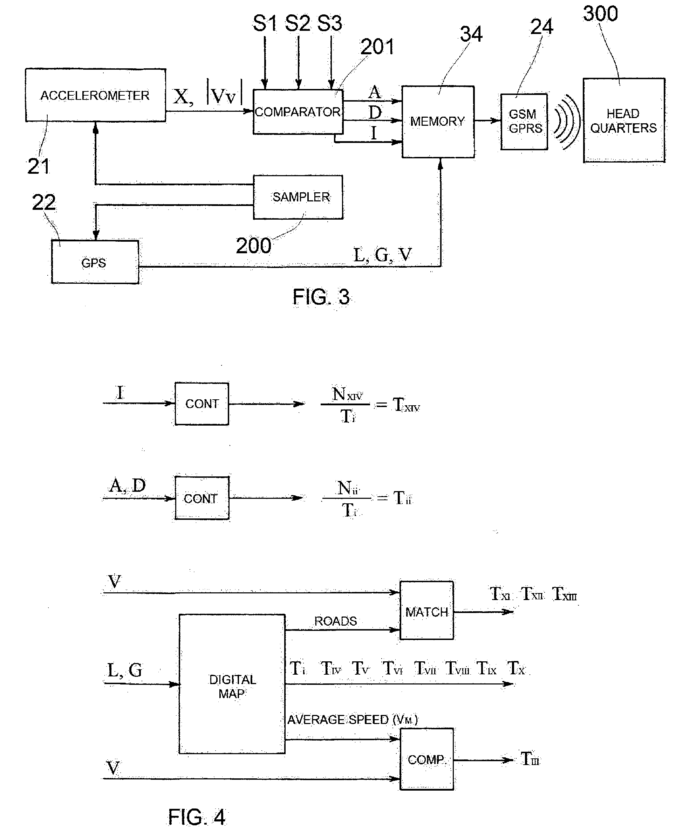

Referring to Fig. 3, the microprocessor (20) comprises a sampler (200) and a comparator (201). The sampler (200) samples the accelerometer (21) at a frequency from 800 to 1200 Hz. The samples of accelerations (A) detected by the accelerometer (21) are processed by the microprocessor (20) that is responsible for identifying sudden accelerations/decelerations made by the driver and indicative of improper driving and very sudden accelerations and decelerations made by the vehicle and indicative of a crash.

During the installation of the device (1) a rotation matrix is automatically determined to pass from the reference system of the accelerometer (21) to the reference system of the vehicle. The rotation matrix is necessary to project the acceleration measures from the reference system of the accelerometer (Xₐ Yₐ Zₐ) to the reference system of the vehicle (X Y Z), assuming that in the reference system of the vehicle axis X corresponds to the traveling direction and axis Y is orthogonal and coplanar to axis X. The accelerometer (21) detects an acceleration vector vₐ(x,y,z) on three axes in the XₐYₐZₐ reference system. The vector vₐ is projected in the XYZ reference system of the vehicle obtaining a vector vᵥ(x,y,z). The component X of the vector vᵥ represents the instantaneous acceleration recorded along the traveling direction of the vehicle and is useful for the evaluation of sudden accelerations and braking. Acceleration is detected if the component X of the vector vᵥ is positive, whereas deceleration is detected if the component (X) of vᵥ is negative. In order to identify a crash, the system takes into consideration the module of the vector vᵥ. The two elements, i.e. component x of vᵥ and module of vᵥ, are sent to the comparator (201). The component X is compared with threshold values S1, S2 and the module of vᵥ is compared with threshold value S3. The first threshold value (S1) indicates a sudden acceleration and is set at approximately ½ g. The second threshold value (S2) indicates a sudden deceleration and is set at approximately -½ g. The third threshold value (S3) indicates a very sudden acceleration/deceleration indicative of a possible crash and is set at approximately 2 g.

If the component X of vᵥ is higher than the first threshold value (S1), the comparator (201) sends a signal (A) indicative of the sudden acceleration to the memory (34). If the component X of vᵥ is lower than the second threshold value (S2), the comparator (201) sends a signal (D) indicative of the sudden deceleration to the memory (34). If the module of the vector vᵥ is higher than the third threshold value (S3), the comparator (201) sends a signal (I) indicative of a crash to the memory (34).

If the comparator (201) detects that the module of the vector vᵥ exceeds the third threshold value (S3), the microcontroller (20) records the entire dataset of sampled accelerations in the memory (34) in a range comprised between 10 seconds before and 3 seconds after the instant in which the threshold is exceeded. Then, the microcontroller (20) locally records the event in the memory (34), identifying it as a crash event (I).

The sudden acceleration values (A), sudden deceleration values (B) and crash events (I) are sent to an operations center (300) by means of the GSM/GPRS module (24).

The microprocessor (20) samples the GPS (22) at a frequency of approximately 1-10 Hz. The GPS (22) detects three values: latitude (L), longitude (G) and speed (V) of the vehicle. The samples of latitude (L), longitude (G) and speed (V) acquired by the GPS (22) are recorded in the memory (34) in order to be successively sent to the remote operations center (300) by means of the GSM/GPRS module (24).

If the GPS signal is not available, the speed of the vehicle (V) is detected by the information retrieval device (103) of the control unit of the vehicle and sent to the memory (34) of the device by means of the Bluetooth modules (102, 9).

At programmable intervals or upon request from the remote operations center (300), the device (1) sends the acquired data to the operations center (300) by means of the GSM/GPRS module (24). The remote operations center (300) receives the data from the device (1) and records it in a database in order to make it available for calculation of the risk indicator associated with the driving style of the vehicle driver. The calculation of the risk indicator is made at regular intervals, when the operations center (300) has collected a relevant quantity of data.

Referring to Fig. 4, in the operations center (300) the latitude (L) and longitude (G) detected by the GPS (22) are projected on digital mapping through a mapmatch algorithm. In this way it is possible to eliminate the error introduced by the GPS and reconstruct the path of the vehicle in such manner that it exactly follows the real road map extracted from the digital mapping.

The GPS data projected on the mapping, the speed of the vehicle (V) detected by the GPS or by the control unit of the vehicle, the sudden accelerations and decelerations (A, D) and the crash events (I) detected by the accelerometer are used to obtain parameters indicative of the driving style of the vehicle driver.

Accelerations (A) and decelerations (D) are counted in such manner to obtain a number (Nii), and also accidents (I) are counted in such manner to obtain a number of accidents (Nxiv).

The following information is obtained from the latitude (L) and longitude (G) detected by the GPS (22) and projected on the mapping, following the path of the vehicle on the mapping: total kilometers traveled by the vehicle and kilometers traveled by the vehicle in different types of road, such as highways, suburban roads, urban roads, one-way streets, two-way streets. Also information about the transits of the vehicle is obtained, that is the number of times the vehicle passes through a junction or around a roundabout.

The latitude (L), longitude (G) and speed (V) detected by the multiple devices (1) installed in circulating vehicles are used by the system of the operations center (300) to calculate, for each section of road of the digital mapping, an average speed (V_{M}), i.e. the speed maintained by the majority of users in the specific section of road. Successively, by comparing the speed values (V) detected by the GPS (22) or by the information retrieval device (103) with the average speed (V_{M}) on the section of road where the vehicle is traveling, information on the number of times the speed is exceeded by the individual driver (speed deviation of the individual user from the average behavior) is obtained.

Moreover, by matching the speed values (V) detected by the GPS (22) or by the information retrieval device (103) with the roads traveled by the vehicle detected from the mapping, information is obtained on the average speed in various types of road, such as highways, suburban roads, urban roads.

The following parameters are calculated by the software program of the operations center (300):
i. Total number of kilometers traveled
ii. Number of sudden accelerations (A) and/or decelerations (D)/total kilometers
iii. Number of times in which speed is exceeded
iv. Kilometers traveled on highways/total kilometers
v. Kilometers traveled on suburban roads/total kilometers
vi. Kilometers traveled on urban roads/total kilometers
vii. Number of transits in junction/traveled kilometers
viii. Number of transits in roundabout/traveled kilometers
ix. Kilometers traveled on one-way roads/total kilometers
x. Kilometers traveled on two-way roads/total kilometers
xi. Average speed on highway
xii. Average speed on suburban roads
xiii. Average speed on urban roads
xiv. Number of accidents (I)

These parameters (Tᵢ...Tₓᵢᵥ) represent the terms of a polynomial of type P = K₁Tᵢ + K₂Tᵢᵢ +...K₁₄T_{xiv.} The result of the polynomial is a value that is representative of the driving style of the driver.

Coefficients (K1...K14) are determined according to an analysis to be carried out on a significant sample of test users, with known behavior set in advance. For instance, a calibration campaign of the model can be planned, with n typologies of different users traveling for one week: the first subset of users following a very caution driving behavior, the second subset following a normal behavior and the third subset following a risk behavior.

Consequently, it will be possible to collect three subsets of homogeneous data and then calculate the representative value of the driving style (P) for three different risk classes (cautious, normal, risky). Therefore, the determination of the coefficients K is such that these coefficients interpolate in linear or polynomial manner the intermediate behaviors of the users and the polynomial provides a number comprised between 0 and 10 representative of the user's risk P = 0 (low risk); P = 10 (high risk).

## Claims

1. A method for characterizing the driving style (P) of a vehicle driver, comprising the following steps:
a) detection of acceleration (X, vᵥ) of the vehicle by means of an accelerometer (21),
b) comparison of said acceleration (X, vᵥ) with preset threshold values (S1, S2, S3) to detect sudden accelerations/decelerations (A, D) indicative of improper driving and very sudden accelerations/decelerations (I) indicative of an accident,
c) detection of latitude (L), longitude (G) and speed (V) values of the vehicle by means of a GPS module (22),
d) storage of said sudden accelerations/decelerations (A, D) and very sudden accelerations/decelerations (I) and said latitude (L), longitude (G) and speed (V) values of the vehicle in a memory (34),
e) transmission of said values (A, D, I, L, G, V) stored in the memory (34) to a remote operations center (300) by means of a GSM/GPRS module (24), wherein the remote operations center (300) calculates information on the number of sudden accelerations/decelerations (Tii) and number of accidents (Txiv) and further performs the following steps (f, g, h):
f) projection of the latitude (L) and longitude (G) values detected by the GPS (22) on digital mapping in such manner that, by following the route of the vehicle on the map, information is obtained about:
- total Kilometers traveled by the vehicle (Ti),
- Kilometers traveled by the vehicle on different types of road (Tiv, Tv, Tvi, Tix, Tx),
- transits of the vehicle through a junction or around a roundabout (Tvii, Tviii)
g) comparison of the speed values (V) detected by the GPS (22) with average speed values (V_{M}) calculated as speed average of vehicles in the specific section of road, in order to obtain information (Tiii) on the number of times the speed is exceeded by the driver,
h) matching of speed values (V) detected by the GPS (22) with the roads traveled by the vehicle detected from the mapping, in order to obtain information (Txi, Txii, Txiii) on the average speed on various types of roads,
i) generation of a polynomial (P) with the values of the information (Ti- Txiv) obtained in steps (e, f, g, h) that represents the characterization of the driving style of the vehicle driver.

2. A method according to claim 1, **characterized in that** if the GPS signal is not available for the GPS module (22), the speed of the vehicle (V) is detected by an information retrieval device (103) connected to the control unit of the vehicle and sent to the memory (34) of the device by means of Bluetooth modules (102, 9).

3. A method according to any one of the preceding claims, **characterized in that** said threshold values (2) comprise:
- a first threshold value (S1) indicative of a sudden acceleration,
- a second threshold value (S2) indicative of a sudden deceleration, and
- a third threshold value (S3) indicative of a very sudden acceleration/deceleration that occurs with an accident.

4. A method according to claim 3, **characterized in that** said accelerometer (21) detects an acceleration vector vₐ(x,y,z) in its reference system along three axes that is converted, by means of rotation, into an accelerator vector vᵥ(x,y,z) in the reference system of the vehicle, wherein the component (X) of the vector (vᵥ), corresponds the measure of the instantaneous acceleration in the traveling direction of the vehicle and is compared with the first threshold value (S1) and the second threshold value (S2) to detect respectively sudden accelerations (A) and decelerations (D) and wherein the module of vector (vᵥ) is compared with said third threshold value (S3) to detect very sudden accelerations/decelerations (I) indicative of an accident.

5. A method according to claim 4, **characterized in that** when the module of vector (vᵥ) exceeds the third threshold value (S3), all accelerations/decelerations (A, D) sampled in a time interval comprising the instant when the third threshold value (S3) is exceeded are recorded in the memory (34).

6. A method according to claim 5, **characterized in that** said sampling interval of accelerations/decelerations (A, D) is comprised between 10 seconds before and 3 seconds after the instant when the third threshold value (S3) is exceeded.

7. A method according to any one of claims 3 to 6, **characterized in that** said first threshold value (S1) is equal to 1/2 g, said second threshold value (S2) is equal to - 1/2 g and said third threshold value (S3) is equal to 2 g.

8. A method according to any one of the preceding claims, **characterized in that** the accelerometer (21) is sampled with a frequency comprised between 800 - 1200 Hz and said GPS module (22) is sampled with frequency comprised between 1 and 10 Hz.

## Patentansprüche

1. Verfahren zur Kennzeichnung des Fahrstils (P) des Fahrers eines Fahrzeugs, umfassend folgende Schritte:
a) Erfassung einer Beschleunigung (X, vᵥ) des Fahrzeugs mittels eines Beschleunigungsmessers (21),
b) Vergleich der Beschleunigung (X, vᵥ) mit voreingestellten Schwellwerten (S1, S2, S3) zur Erfassung von plötzlichen Beschleunigungen/Verzögerungen (A, D), die Hinweis auf eine inkorrekte Fahrweise geben, und von sehr heftigen Beschleunigungen/Verzögerungen (I), die Hinweis auf einen Unfall geben,
c) Erfassung von Breitengrad- (L), Längengrad- (G) und Geschwindigkeitswerten (V) des Fahrzeugs mittels eines GPS-Moduls (22),
d) Speicherung der plötzlichen Beschleunigungen/Verzögerungen (A, D) und sehr heftigen Beschleunigungen/Verzögerungen (I) sowie der Breitengrad- (L), Längengrad- (G) und Geschwindigkeitswerte (V) des Fahrzeugs in einem Speicher (34),
e) Übertragung der im Speicher (34) gespeicherten Werte (A, D, I, L, G, V) an eine Fernbetriebsleitstelle (300) mittels GSM/GPRS-Modul (24), wobei die Fernbetriebsleitstelle (300) Informationen bezüglich der Anzahl von plötzlichen Beschleunigungen/Verzögerungen (Tii) und der Anzahl von Unfällen (Txiv) berechnet und außerdem folgende Schritte (f, g, h) ausführt:
f) Projektion der vom GPS (22) erfassten Breitengrad- (L) und Längengradwerte (G) auf digitale Kartographie, um bei Verfolgung des Fahrzeugs auf der Kartographie folgende Informationen zu erhalten:
- die vom Fahrzeug zurückgelegte Gesamtkilometerzahl (Ti),
- die vom Fahrzeug auf verschiedenen Straßen (Tiv, Tv, Tvi, Tix, Tx) zurückgelegte Kilometerzahl,
- vom Fahrzeug durchfahrene Kreuzungen oder Kreisverkehrsstrecken (Tvii, Tviii),
g) Vergleich der vom GPS (22) erfassten Geschwindigkeitswerte (V) mit durchschnittlichen Geschwindigkeitswerten (V_{M}), die als Geschwindigkeitsmittelwert der Fahrzeuge auf diesem bestimmten Straßenabschnitt berechnet wurden, um Informationen (Tiii) über die Geschwindigkeitsüberschreitungen des Fahrers zu erhalten,
h) Verbindung der vom GPS (22) erfassten Geschwindigkeitswerte (V) mit den vom Fahrzeug befahrenen, von der Kartographie erfassten Straßen, um Informationen (Txi, Txii, Txiii) über die Durchschnittsgeschwindigkeit auf verschiedenen Arten von Straßen zu erhalten,
i) Generierung eines Polynoms (P) mit den Werten der in den Schritten (e, f, g, h) erhaltenen Informationen (Ti - Txiv), das die Kennzeichnung des Fahrstils des Fahrzeugfahrers darstellt.

2. Verfahren nach Anspruch 1, **dadurch gekennzeichnet, dass** in Ermangelung des GPS-Signals für das GPS-Modul (22) die Geschwindigkeit des Fahrzeugs (V) von einer mit der Steuereinheit des Fahrzeugs verbundenen Informationsbeschaffungsvorrichtung (103) erfasst und mittels Bluetooth-Modulen (102, 9) an den Speicher (34) der Vorrichtung übertragen wird.

3. Verfahren nach einem der vorstehenden Ansprüche, **dadurch gekennzeichnet, dass** die Schwellwerte Folgendes umfassen:
- einen ersten Schwellwert (S1), der Hinweis auf eine plötzliche Beschleunigung gibt,
- einen zweiten Schwellwert (S2), der Hinweis auf eine plötzliche Verzögerung gibt, und
- einen dritten Schwellwert (S3), der Hinweis auf eine bei einem Unfall auftretende, sehr heftige Beschleunigung/Verzögerung gibt.

4. Verfahren nach Anspruch 3, **dadurch gekennzeichnet, dass** der Beschleunigungsmesser (21) einen Beschleunigungsvektor vₐ(x,y,z) in seinem Bezugssystem auf drei Achsen erfasst, der mittels Drehung in einen Beschleunigungsvektor vᵥ(x,y,z) im Bezugssystem des Fahrzeugs verwandelt wird, wobei die Komponente (X) des Vektors (vᵥ) dem Instant-Beschleunigungswert des Fahrzeugs in Fahrtrichtung entspricht und mit dem ersten Schwellwert (S1) sowie dem zweiten Schwellwert (S2) verglichen wird, um plötzliche Beschleunigungen (A) und Verzögerungen (D) zu erfassen und wobei das Vektormodul (vᵥ) dem dritten Schwellwert (S3) gegenübergestellt wird, um sehr heftige Beschleunigungen/Verzögerungen (I) zu erfassen, die Hinweis auf einen Unfall geben.

5. Verfahren nach Anspruch 4, **dadurch gekennzeichnet, dass** bei Überschreiten des dritten Schwellwertes (S3) seitens des Vektormoduls (vᵥ) alle Beschleunigungen/Verzögerungen (A, D) im Speicher (34) gespeichert werden, die in einem Zeitintervall abgetastet wurden, der den Moment des Überschreitens des dritten Schwellwertes (S3) umfasst.

6. Verfahren nach Anspruch 5, **dadurch gekennzeichnet, dass** der Abtastzeitintervall der Beschleunigungen/Verzögerungen (A, D) zwischen 10 Sekunden vor und 3 Sekunden nach dem Moment des Überschreitens des dritten Schwellwertes (S3) liegt.

7. Verfahren nach einem der Ansprüche 3 bis 6, **dadurch gekennzeichnet, dass** der erste Schwellwert (S1) gleich 1/2 g, der zweite Schwellwert (S2) gleich - 1/2 g und der dritte Schwellwert (S3) gleich 2 g ist.

8. Verfahren nach einem der vorstehenden Ansprüche, **dadurch gekennzeichnet, dass** der Beschleunigungsmesser (21) mit einer Frequenz von 800 - 1200 Hz und das GPS-Modul (22) mit einer Frequenz von 1 - 10 Hz abgetastet wird.

## Revendications

1. Méthode pour la caractérisation du style de conduite (P) du conducteur d'un véhicule, comprenant les étapes suivantes :
a) détection d'une accélération (X, vᵥ) du véhicule, moyennant un accéléromètre (21),
b) comparaison de la dite accélération (X, vᵥ) avec des valeurs de seuil préfixées (S1, S2, S3) pour détecter des accélérations/décélérations brusques (A, D) indicatrices d'une conduite incorrecte et d'accélérations/décélérations très brusques (I) indicatrices d'un accident,
c) détection de valeurs de latitude (L), longitude (G) et vitesse (V) du véhicule moyennant un module GPS (22),
d) sauvegarde dans une mémoire (34) des dites accélérations/décélérations brusques (A, D) et très brusques (I) et des dites valeurs de latitude (L), longitude (G) et vitesse (V) du véhicule,
e) transmission de dites valeurs (A, D, I, L, G, V), sauvegardées dans la mémoire (34), à une centrale opérationnelle éloignée (300) à l'aide d'un module GSM/GPRS (24), où la centrale opérationnelle éloignée (300) calcule les informations relatives au nombre d'accélérations/décélérations brusques (Tii) et au nombre d'accidents (Txiv), en effectuant de même les étapes suivantes (f, g, h) :
f) projection sur cartographie numérique des valeurs de latitude (L) et de longitude (G) détectées par le GPS (22), de manière à ce qu'en suivant le trajet du véhicule sur la cartographie, on obtient les informations relatives à :
- nombre total de kilomètres parcourus par le véhicule (Ti),
- nombre de kilomètres parcourus par le véhicule sur plusieurs types de routes (Tiv, Tv, Tvi, Tix, Tx),
- passages du véhicule à un croisement ou autour d'une giratoire (Tvii, Tviii)
g) comparaison des valeurs de vitesse (V) détectées par le GPS (22) avec les valeurs de vitesse moyenne (V_{M}) calculée sous forme d'une moyenne des vitesses des véhicules qui transitent sur ce segment de route, pour obtenir des informations (Tiii) en ce qui concerne le nombre de fois que le conducteur a dépassé la vitesse consentie,
h) rapport des valeurs de vitesse (V) relevées par le GPS (22) avec les routes parcourues par le véhicule détectées par la cartographie, pour obtenir des informations (Txi, Txii, Txiii) sur la vitesse moyenne sur différents types de routes,
i) génération d'un polynôme (P) avec les valeurs des informations (Ti - Txiv) obtenues dans les étapes (e, f, g, h) constituant la caractérisation du style de conduite du conducteur du véhicule.

2. Méthode selon la revendication 1, **caractérisée en ce que** si le signal GPS n'est pas disponible pour le module GPS (22), la vitesse du véhicule (V) est détectée par un dispositif de récupération des informations (103) connecté à une centrale du véhicule et transmise via des modules Bluetooth (102, 9) à la mémoire (34) du dispositif,

3. Méthode selon l'une quelconque des revendications précédentes, **caractérisée en ce que** les dites valeurs de seuil (2) comprennent :
- une première valeur de seuil (S1) indicatrice d'une brusque accélération,
- une deuxième valeur de seuil (S2) indicatrice d'une brusque décélération, et
- une troisième valeur de seuil (S3) indicatrice d'une accélération/décélération très brusque qui se vérifie lors d'un accident.

4. Méthode selon la revendication 3, **caractérisée en ce que** le dit accéléromètre (21) détecte un vecteur d'accélération vₐ(x,y,z) dans son système de référence le long de trois axes qui est transformé, moyennant rotation, en un vecteur d'accélération vᵥ(x,y,z) dans le système de référence du véhicule, où le composant (X) du vecteur (vᵥ), correspond à la mesure de l'accélération instantanée dans la direction de marche du véhicule et qui est comparée avec le premier seuil (S1) et le deuxième seuil (S2) pour respectivement détecter les accélérations brusques (A) et les décélérations (D) et où le module du vecteur (vᵥ) est comparé avec la dite troisième valeur de seuil (S3) pour détecter des accélérations/décélérations très brusques (I) indicatrices d'un accident.

5. Méthode selon la revendication 4, **caractérisée en ce que** lorsque le module du vecteur (vᵥ) dépasse la troisième valeur de seuil (S3), toutes les accélérations/décélérations (A, D) échantillonnées dans un intervalle de temps qui comprend l'instant de dépassement de la troisième valeur de seuil (S3) sont sauvegardées dans la mémoire (34).

6. Méthode selon la revendication 5, **caractérisée en ce que** le dit intervalle de temps d'échantillonnage des accélérations/décélérations (A, D) est compris dans une plage de 10 secondes avant et 3 secondes après l'instant de dépassement de la troisième valeur de seuil (S3).

7. Méthode selon l'une quelconque des revendications de 3 à 6, **caractérisée en ce que** la dite première valeur de seuil (S1) est égale à 1/2 g, dite deuxième valeur de seuil (S2) est égale à - -1/2 g, et dite troisième valeur de seuil (S3) est égale à 2 g.

8. Méthode selon l'une quelconque des revendications précédentes, **caractérisée en ce que** le dit accéléromètre (21) est échantillonné dans la plage de fréquence 800 - 1200 Hz et le dit module GPS (22) est échantillonné dans la plage de fréquence 1 - 10 Hz.
